# EUROPÄISCHE PATENTSCHRIFT

(11) **EP 3 988 351 B1**
(45) Veröffentlichungstag und Bekanntmachung des Hinweises auf die Patenterteilung: **30.08.2023**
(21) Anmeldenummer: 21184235.6
(22) Anmeldetag: 07.07.2021
(51) Int. Cl.: B60D 5/00, B60P 1/44, B60P 3/20

(54) **LASTKRAFTWAGENZUG MIT ÜBERFAHRBRÜCKE ZWISCHEN ZUGFAHRZEUG UND ANHÄNGER**
ARTICULATED TRUCK WITH LOADING BRIDGE BETWEEN TOWING VEHICLE AND TRAILER
TRAIN DE CAMIONS À PONT TRAVERSANT ENTRE LE VÉHICULE DE TRACTION ET REMORQUE

(30) Priorität: 23.10.2020 DE 202020106071 U
(43) Veröffentlichungstag der Anmeldung: 27.04.2022
(73) Patentinhaber: Rohr Spezialfahrzeuge GmbH, 94315 Straubing (DE)
(72) Erfinder: Janker, Wilhelm, 94363 Oberschneiding (DE)
(74) Vertreter: advotec.

(56) Entgegenhaltungen:
- DE-A1- 19 957 499
- DE-A1-102019 100 819
- DE-U1- 29 922 151
- DE-U1-202009 016 356

## Beschreibung

Die Erfindung betrifft einen Lastkraftwagenzug mit den Merkmalen des Oberbegriffs des Anspruchs 1.

Ein derartiger Lastkraftwagenzug ist aus der Praxis bekannt, siehe z.B. die Offenlegungsschrift DE 10 2019 100819 A1, und beispielsweise in Form eines Kühlkofferzugs ausgebildet, bei dem ein Zugfahrzeug einen ersten Kastenaufbau aufweist, der als Kühlkoffer bzw. Kühleinheit ausgebildet ist und in dem Lasten aufgenommen werden können. Ein Anhänger des Kühlkofferzuges weist ebenfalls einen Kastenaufbau auf, der als Kühlkoffer bzw. Kühleinheit zur Aufnahme von Lasten ausgebildet ist. Der Kühlkoffer der Zugmaschine hat eine Hecköffnung, die mittels einer Klappe oder mittels Türen geschlossen werden kann. Der Kühlkoffer des Anhängers hat heckseitig eine Ladeöffnung, die ebenfalls mittels einer Klappe oder mittels Türen geschlossen werden kann. Zudem hat der Kühlkoffer des Anhängers an seiner Bugseite eine weitere Öffnung, welche mittels einer Frontschwenkklappe geschlossen werden kann. Um Lasten zwischen dem Kühlkoffer des Zugfahrzeugs und dem Kühlkoffer des Anhängers bewegen zu können, kann zwischen diesen beiden Baueinheiten eine Überfahrbrücke angeordnet werden, welche mit ihrem vorderen Rand an den Kühlkoffer des Zugfahrzeugs und mit ihrem hinteren Rand an den Kühlkoffer des Anhängers grenzt. Bei bisherigen Kühlkofferzügen der vorstehend beschriebenen Art besteht das Problem, dass während der Nutzung der Überfahrbrücke ein hohes Maß an Kälte an die Umgebung abgegeben wird, was einerseits zu einer Unterbrechung der Kühlkette führen kann und andererseits einen hohen Energieaufwand bei der Kühlung der Kühlkoffer nach sich zieht.

Der Erfindung liegt die Aufgabe zugrunde, einen Lastkraftwagenzug der vorstehend beschriebenen Art zu schaffen, bei dem bei der Nutzung der Überfahrbrücke zwischen dem Zugfahrzeug und dem Anhänger der Kälteverlust verringert ist.

Diese Aufgabe ist erfindungsgemäß durch den Lastkraftwagenzug mit den Merkmalen des Anspruchs 1 gelöst.

Erfindungsgemäß wird also ein Lastkraftwagenzug vorgeschlagen, der ein Zugfahrzeug mit einem ersten Kastenaufbau zur Aufnahme von Lasten und einen Anhänger mit einem zweiten Kastenaufbau zur Aufnahme von Lasten sowie eine Überfahrbrücke zwischen dem ersten Kastenaufbau und dem zweiten Kastenaufbau umfasst. Es sind zwei Seitenwände vorgesehen, die jeweils zwischen einer Staustellung, in der sie von dem ersten Kastenaufbau oder dem zweiten Kastenaufbau aufgenommen sind, und einer Betriebsstellung verstellbar sind, in der sie jeweils zwischen den beiden Kastenaufbauten aufgespannt sind und die Überfahrbrücke seitlich begrenzen. Die Seitenwände verhindern im Bereich der Überfahrbrücke in Querrichtung einen Luftaustausch mit der Umgebung. Dadurch ist es möglich, das Temperaturniveau in dem Raum oberhalb der Überfahrbrücke geringeren Schwankungen auszusetzen. Die Seitenwände bewirken eine insbesondere auch thermische Trennung zwischen dem Raum oberhalb der Überfahrbrücke und der seitlichen Umgebung.

Bei einer bevorzugten Ausführungsform des Lastkraftwagenzugs nach der Erfindung sind die Seitenwände jeweils von einer Rolloanordnung gebildet. Eine Rolloanordnung kann platzsparend in dem Lastkraftwagenzug aufgenommen sein und im Bedarfsfall in einfacher Weise zwischen der Staustellung und der Betriebsstellung verstellt werden, und zwar durch Betätigung einer Rollobahn der Rolloanordnung.

Die Rolloanordnungen können jeweils mit einer selbsttätig wirkenden Aufwickeleinrichtung versehen sein. In diesem Falle weisen die Rolloanordnungen beispielsweise jeweils eine Rollobahn und eine Wickelwelle auf, die insbesondere mittels einer Federeinrichtung bzw. Wickelfeder in Aufwickelrichtung vorgespannt ist. Alternativ und/oder zusätzlich ist es auch denkbar, dass die Rollobahn selbst an ihren seitlichen Rändern jeweils mit einer Rollfeder oder dergleichen vorgesehen ist, so dass gegebenenfalls auf eine Wickelwelle mit Wickelfeder verzichtet werden kann. Die Rollfedern, die aus Federstahlstreifen gebildet sein können, bewirken ein Aufwickeln der Rollobahn bei deren Freigabe.

Die Wickelwelle der Rolloanordnung ist vorzugsweise an dem Kastenaufbau des Zugfahrzeugs fixiert. Die Rollobahn ist mit dem der Wickelwelle abgewandten Rand an dem Kastenaufbau des Anhängers fixierbar. Denkbar ist natürlich auch eine Anordnung, bei der die Wickelwelle an dem Kastenaufbau des Anhängers fixiert ist und die Rollobahn mit ihrem der Wickelwelle abgewandten Rand im ausgezogenen Zustand zur Ausbildung der betreffenden Seitenwand an dem Kastenaufbau des Zugfahrzeugs befestigt wird.

Zur Fixierung der Rollobahn im ausgezogenen Zustand ist vorzugsweise an deren der Wickelwelle abgewandten Rand ein Zugspriegel angeordnet, der an einem Gegenelement sicherbar ist, das bei Anordnung der Wickelwelle an dem zweiten Kastenaufbau an dem ersten Kastenaufbau angeordnet ist und bei Anordnung der Wickelwelle an dem ersten Kastenaufbau an dem zweiten Kastenaufbau angeordnet ist.

Beispielsweise ist das Gegenelement, an dem der Zugspriegel sicherbar bzw. fixierbar ist, von einer Ankerschienenanordnung gebildet, die in dem betreffenden, der Wickelwelle abgewandten Kastenaufbau angeordnet ist.

Damit die Seitenwand eine möglichst luftdichte Ausbildung hat, umfasst die Rollobahn bei einer bevorzugten Ausführungsform des Lastkraftwagens nach der Erfindung eine Plane, die insbesondere mehrlagig ausgebildet sein kann.

Zur Realisierung der Überfahrbrücke kann der erste Kastenaufbau, der an dem Zugfahrzeug ausgebildet ist, eine Heckladebühne aufweisen, welche in einer entsprechenden Schwenkstellung die Überfahrbrücke bildet.

Der zweite Kastenaufbau, der dem Anhänger zugeordnet ist, hat vorzugsweise eine Bugöffnung, an die die Überfahrbrücke in ihrer Betriebsstellung grenzt.

Zum Verschließen der Bugöffnung des zweiten Kastenaufbaus kann an dem zweiten Kastenaufbau eine Frontschwenkklappe angeordnet sein, mittels der in deren Öffnungsstellung ein Dach für die Überfahrbrücke ausbildbar ist. In ihrer Schließstellung verschließt die Frontschwencklappe vorzugsweise die Bugöffnung des zweiten Kastenaufbaus.

Die Bugöffnung des zweiten Kastenaufbaus hat vorzugsweise eine Breite, die zumindest weitgehend der Innenraumbreite des zweiten Kastenaufbaus und auch der Breite der Hecköffnung des ersten Kastenaufbaus entspricht. Die Höhe der Bugöffnung des zweiten Kastenaufbaus kann sich über die gesamte Höhe des zweiten Kastenaufbaus erstrecken.

Weitere Vorteile und vorteilhafte Ausgestaltungen des Gegenstandes der Erfindung sind der Beschreibung, der Zeichnung und den Ansprüchen entnehmbar.

Ein Ausführungsbeispiel eines Lastkraftwagenzugs nach der Erfindung ist in der Zeichnung schematisch vereinfacht dargestellt und wird in der nachfolgenden Beschreibung näher erläutert.
- Figur 1: eine Seitenansicht eines Lastkraftwagenzugs nach der Erfindung; und
- Figur 2: eine Draufsicht auf einen Übergangsbereich zwischen einem Zugfahrzeug und einen Anhänger des Lastkraftwagenzugs nach Figur 1.

In der Zeichnung ist ein als Kühlkofferzug ausgebildeter Lastkraftwagenzug 10 dargestellt, der zum Transport und zur Kühlung von Lasten, insbesondere von Lebensmitteln und dergleichen dient und ein Zugfahrzeug 12 und einen Anhänger 14 umfasst, der über eine Deichsel 16 mit einer Anhängerkupplung 18 des Zugfahrzeugs 12 koppelbar ist. Die Deichsel 16 ist längenveränderbar, so dass der Abstand zwischen dem Zugfahrzeug 12 und dem Anhänger 14 einstellbar ist.

Das Zugfahrzeug 12 umfasst ein Zugfahrzeugfahrwerk 26, ein Führerhaus 20 und einen ersten als Kühlkoffer ausgebildeten Kastenaufbau 22, der eine Hecköffnung 24 hat, die zumindest weitgehend den Innenquerschnitt des Kastenaufbaus 22 abdeckt.

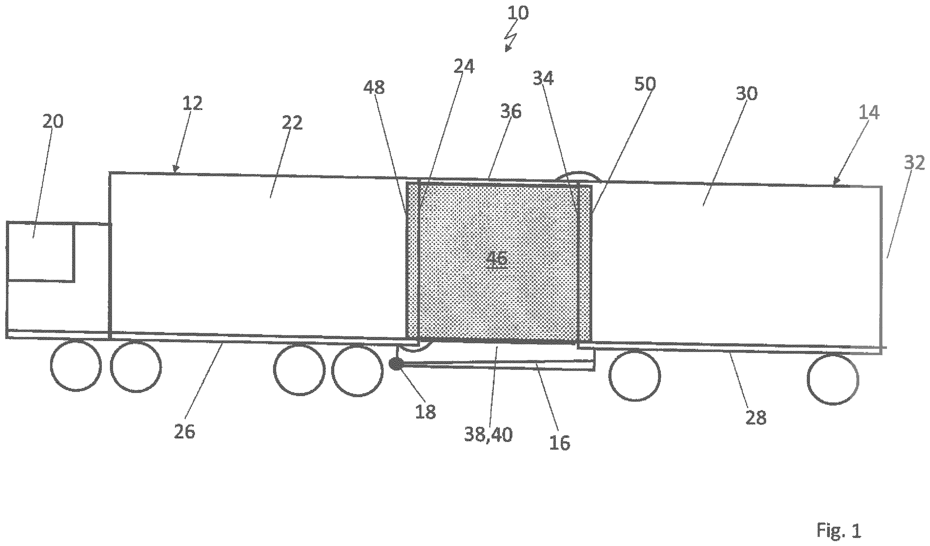

Der Anhänger 14 hat ein Anhängerfahrwerk 28, auf dem ein zweiter, als Kühlkoffer ausgebildeter Kastenaufbau 30 angeordnet ist. Der Kastenaufbau 30 hat eine Hecköffnung 32, die mittels nicht näher dargestellten Hecktüren verschließbar ist. Zudem weist der Kastenaufbau 30 des Anhängers 14 eine Front- bzw. Bugöffnung 34 auf, deren Abmessungen im Wesentlichen dem Innenquerschnitt des zweiten Kastenaufbaus 30 und auch den Abmessungen der Hecköffnung 24 des Kastenaufbaus 22 des Zugfahrzeugs 12 entsprechen. Um die Bugöffnung 34 verschließen zu können, ist an dem zweiten Kastenaufbau 30 eine Frontschwenkklappe 36 angeordnet, welche um eine sich in Fahrzeugquerrichtung erstreckende Achse am vorderen oberen Rand des zweiten Kastenaufbaus 30 zwischen einer in Figur 1 dargestellten Öffnungsstellung und einer die Bugöffnung 34 verschließenden Schließstellung verschwenkbar ist.

Am Heck des Zugfahrzeugs 12 ist eine Ladebühne 38 mit einer Plattform 40 angeordnet. Zur Realisierung einer Überfahrbrücke kann die Plattform 40 in eine horizontale Stellung gebracht werden, in der sie mit einem Boden des Kastenaufbaus 22 und einem Boden des Kastenaufbaus 30 fluchtet. Der vordere Rand der Plattform 40 grenzt dann an die geöffnete Hecköffnung 24 des Kastenaufbaus 22. Die Deichsel 16 des Anhängers 14 wird so eingestellt, dass der heckseitige Rand der Plattform 40 der Ladebühne 38 an die geöffnete Bugöffnung 34 des Kastenaufbaus 30 des Anhängers 14 grenzt. Damit können Gegenstände in bequemer Weise zwischen den beiden Kastenaufbauten 22 und 30 verschoben werden. Die Frontschwenkklappe 36, die in geöffnetem Zustand der Frontöffnung 34 eine horizontale Ausrichtung hat, bildet ein Dach für die so ausgebildete Überfahrbrücke.

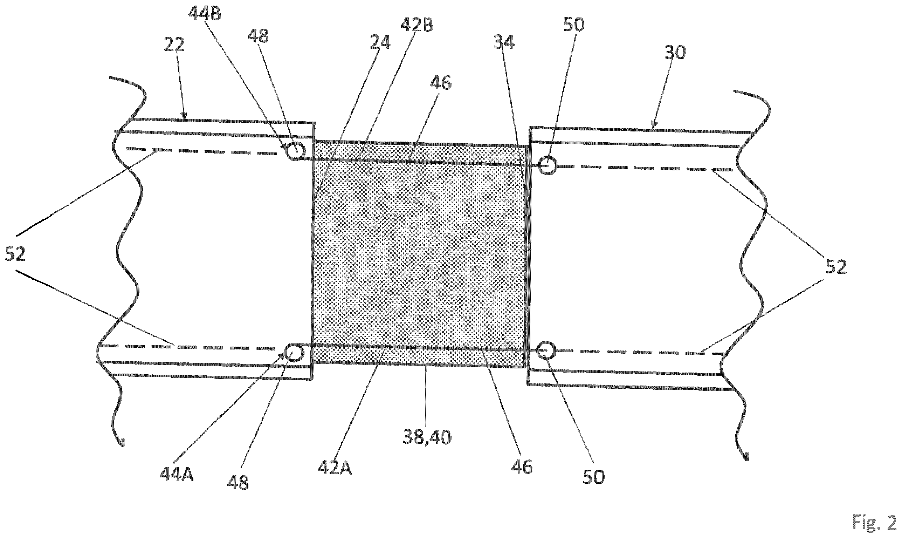

Wie insbesondere Figur 2 zu entnehmen ist, umfasst die Überfahrbrücke seitliche Wände 42A und 42B, die jeweils von einer Rolloanordnung 44A bzw. 44B gebildet sind. Die Seitenwände 42A und 42B verhindern einen übergroßen Luftaustausch bzw. Wärmeaustausch zwischen dem Raum über der von der Ladebühne 38 gebildeten Überfahrbrücke und der Umgebung.

Die beiden Rolloanordnungen 44A und 44B umfassen jeweils eine Rollobahn 46 aus einem planenartigen, wickelbaren und beispielsweise luftdichten Material, die auf eine jeweilige Wickelwelle 48 aufwickelbar bzw. von dieser abwickelbar ist. Die Wickelwellen 48 sind mit einer vertikalen Ausrichtung an den seitlichen Rändern der Hecköffnung 24 des Kastenaufbaus 22 des Zugfahrzeugs 12 beispielsweise an Ankerschienen 52 befestigt und jeweils mit einer nicht näher dargestellten Wickelfeder versehen, so dass die betreffende Rollobahn 46 in Aufwickelrichtung vorgespannt ist bzw. sich selbsttätig auf die betreffende Wickelwelle 48 aufwickeln kann. Die Rollobahnen 46 weisen des Weiteren jeweils an dem der betreffenden Wickelwelle 48 abgewandten Rand einen stangenartigen Zugspriegel 50 auf, der an jeweiligen von Ankerschienen 52 gebildeten Gegenelementen gesichert werden kann, die an dem Kastenaufbau 30 des Anhängers 14 ausgebildet sind. Die Zugspriegel 50 greifen hierzu mit ihren Enden in Ausnehmungen der Ankerschienen 52 ein. Wenn die Zugspriegel 50 von den Ankerschienen 52 gelöst werden und damit die Rollobahnen 46 freigegeben werden, wickeln sich letztere aufgrund der Federwirkung der Wickelfedern selbsttätig auf die Wickelwellen 48 auf.

### Bezugszeichenliste

- 10: Lastkraftwagenzug
- 12: Zugfahrzeug
- 14: Anhänger
- 16: Deichsel
- 18: Anhängerkupplung
- 20: Führerhaus
- 22: erster Kastenaufbau
- 24: Hecköffnung
- 26: Zugfahrzeugfahrwerk
- 28: Anhängerfahrwerk
- 30: zweiter Kastenaufbau
- 32: Hecköffnung
- 34: Bugöffnung
- 36: Frontschwenkklappe
- 38: Ladebühne
- 40: Plattform
- 42A, B: Seitenwand
- 44A, B: Rolloanordnung
- 46: Rollobahn
- 48: Wickelwelle
- 50: Zugspriegel
- 52: Ankerschiene

## Patentansprüche

1. Lastkraftwagenzug, umfassend ein Zugfahrzeug (12) mit einem ersten Kastenaufbau (22) zur Aufnahme von Lasten und einen Anhänger (14) mit einem zweiten Kastenaufbau (30) zur Aufnahme von Lasten sowie eine Überfahrbrücke zwischen dem ersten Kastenaufbau (22) und dem zweiten Kastenaufbau (30), **gekennzeichnet durch** zwei Seitenwände (42A, 42B), die jeweils zwischen einer Staustellung, in der sie von dem ersten Kastenaufbau (22) oder dem zweiten Kastenaufbau (30) aufgenommen sind, und einer Betriebsstellung verstellbar sind, in der sie jeweils zwischen den beiden Kastenaufbauten (22, 30) aufgespannt sind und die Überfahrbrücke jeweils seitlich begrenzen.

2. Lastkraftwagenzug, **dadurch gekennzeichnet, dass** die Seitenwände (42A, 42B) jeweils von einer Rolloanordnung (44A, 44B) gebildet sind.

3. Lastkraftwagenzug nach Anspruch 2, **dadurch gekennzeichnet, dass** die Rolloanordnungen (44A, 44B) jeweils eine Rollobahn (46) und eine Wickelwelle (48) aufweisen, die vorzugsweise mittels einer Federeinrichtung in Aufwickelrichtung vorgespannt ist.

4. Lastkraftwagenzug nach Anspruch 3, **dadurch gekennzeichnet, dass** die Rollobahn (46) an ihrem der Wickelwelle (48) abgewandten Rand einen Zugspriegel (50) aufweist, der im von der Wickelwelle (48) zumindest teilweise abgewickelten Zustand der Rollobahn (46) an einem Gegenelement sicherbar ist, das bei Anordnung der Wickelwelle an dem zweiten Kastenaufbau an dem ersten Kastenaufbau angeordnet ist und bei Anordnung der Wickelwelle (48) in dem ersten Kastenaufbau (22) an dem zweiten Kastenaufbau (30) angeordnet ist.

5. Lastkraftwagenzug nach Anspruch 4, **dadurch gekennzeichnet, dass** das Gegenelement von mindestens einer Ankerschiene (52) gebildet ist, die in dem ersten Kastenaufbau oder dem zweiten Kastenaufbau (30) angeordnet ist.

6. Lastkraftwagenzug nach einem der Ansprüche 3 bis 5, **dadurch gekennzeichnet, dass** die Rollobahn (46) eine Plane umfasst, die insbesondere mehrlagig ausgebildet ist.

7. Lastkraftwagenzug nach einem der Ansprüche 1 bis 6, **dadurch gekennzeichnet, dass** der erste Kastenaufbau (22) eine Heckladebühne (38) aufweist, die die Überfahrbrücke bildet, und der zweite Kastenaufbau (30) vorzugsweise eine Bugöffnung (34) hat, an die die Überfahrbrücke in ihrer Betriebsstellung grenzt.

8. Lastkraftwagenzug nach Anspruch 7, **dadurch gekennzeichnet, dass** der zweite Kastenaufbau (30) mit einer Frontschwenkklappe (36) versehen ist, mittels der in ihrer Öffnungsstellung ein Dach für die Überfahrbrücke ausbildbar ist und die in ihrer Schließstellung vorzugsweise die Bugöffnung (34) des zweiten Kastenaufbaus (30) verschließt.

## Claims

1. Road train, comprising a towing vehicle (12) with a first box-type superstructure (22) for receiving loads and comprising a trailer (14) with a second box superstructure (30) for receiving loads and also comprising a bridge plate between the first box superstructure (22) and the second box superstructure (30), **characterized by** two side walls (42A, 42B), each of which can be adjusted between a stowage position, in which they are received by the first box superstructure (22) or the second box superstructure (30), and an operating position, in which they are each mounted between the two box structures (22, 30) and each laterally delimit the bridge plate.

2. Road train, **characterized in that** the side walls (42A, 42B) are each formed by a roller apron arrangement (44A, 44B).

3. Road train according to Claim 2, **characterized in that** the roller apron arrangements (44A, 44B) each have a roller apron web (46) and a winding shaft (48), which is preferably pretensioned in a winding-up direction by means of a spring device.

4. Road train according to Claim 3, **characterized in that** the roller apron web (46) at its edge facing away from the winding shaft (48) has a draw bar (50), which in the state of the roller apron web (46) in which it is at least partially unwound from the winding shaft (48) can be secured to a mating element, which is arranged on the first box superstructure if the winding shaft is arranged on the second box superstructure and is arranged on the second box superstructure (30) if the winding shaft (48) is arranged in the first box superstructure (22) .

5. Road train according to Claim 4, **characterized in that** the mating element is formed by at least one anchoring rail (52), which is arranged in the first box superstructure or the second box superstructure (30).

6. Road train according to one of Claims 3 to 5, **characterized in that** the roller apron web (46) comprises a canvas, which in particular has a multilayer form.

7. Road train according to one of Claims 1 to 6, **characterized in that** the first box superstructure (22) has a rear loading ramp (38) which forms the bridge plate, and the second box superstructure (30) preferably has a front end opening (34) which adjoins the bridge plate in its operating position.

8. Road train according to Claim 7, **characterized in that** the second box superstructure (30) is provided with a front pivoting flap (36), by means of which in its open position a roof for the bridge plate can be formed and which in its closed position preferably closes the front end opening (34) of the second box superstructure (30).

## Revendications

1. Train de camion, comprenant un véhicule tracteur (12) pourvu d'une première structure de caisse (22), destinée à recevoir des charges et une remorque (14) pourvue d'une deuxième structure de caisse (30), destinée à recevoir des charges, ainsi que d'une passerelle entre la première structure de caisse (22) et la deuxième structure de caisse (30), **caractérisé par** deux parois latérales (42A, 42B), qui sont ajustables chacune entre une position de rangement, dans laquelle elles sont réceptionnées par la première structure de caisse (22) ou la deuxième structure de caisse (30), et une position de service, dans laquelle elles sont déployées chacune entre les deux structures de caisse (22, 30) et délimitent chaque fois latéralement la passerelle.

2. Train de camion, **caractérisé en ce que** les parois latérales (42A, 42B) sont constituées chacune d'un dispositif de store (44A, 44B).

3. Train de camion selon la revendication 2, **caractérisé en ce que** les dispositifs de stores (44A, 44B) comportent chacun une bande de store (46) et un arbre enrouleur (48) qui sont précontraints de préférence par un système à ressorts dans la direction d'enroulement.

4. Train de camion selon la revendication 3, **caractérisé en ce que** sur son bord opposé à l'arbre enrouleur (48), la bande de store (46) comporte une baleine de traction (50) qui lorsque la bande de store (46) est déroulée au moins partiellement de l'arbre enrouleur (48) peut se bloquer sur un élément antagoniste, qui lors du placement de l'arbre enrouleur sur la deuxième structure de caisse, est placé sur la première structure de caisse et lors du placement de l'arbre enrouleur (48) dans la première structure de caisse (22) est placé sur la deuxième structure de caisse (30) .

5. Train de camion selon la revendication 4, **caractérisé en ce que** l'élément antagoniste est constitué d'au moins un rail d'ancrage (52), qui est placé dans la première structure de caisse ou dans la deuxième structure de caisse (30).

6. Train de camion selon l'une quelconque des revendications 3 à 5, **caractérisé en ce que** la bande de store (46) comprend une bâche, qui est notamment conçue en plusieurs couches.

7. Train de camion selon l'une quelconque des revendications 1 à 6, **caractérisé en ce que** la première structure de caisse (22) comporte une rampe de chargement (38) arrière, qui constitue la passerelle, et la deuxième structure de caisse (30) dispose de préférence d'une ouverture avant (34), à laquelle la passerelle est adjacente dans sa position de service.

8. Train de camion selon la revendication 7, **caractérisé en ce que** la deuxième structure de caisse (30) est munie d'un volet pivotant (36) frontal, au moyen duquel, dans sa position d'ouverture, un toit peut être conçu pour la passerelle et qui dans sa position de fermeture, ferme de préférence l'ouverture avant (34) de la deuxième structure de caisse (30).
